# EUROPEAN PATENT APPLICATION

(11) **EP 4 274 351 A1**
(43) Date of publication of application: **08.11.2023**
(21) Application number: 22734802.6
(22) Date of filing: 04.01.2022
(51) Int. Cl.: H04W 72/14, H04W 72/12, H04W 28/02, H04W 88/04, H04W 92/18

(54) **METHOD AND DEVICE FOR RESOURCE ALLOCATION IN WIRELESS COMMUNICATION SYSTEM**

(30) Priority: 04.01.2021 KR 20210000403; 22.02.2021 KR 20210023482; 24.03.2021 KR 20210038168
(71) Applicant: LG Electronics Inc., Yeongdeungpo-gu Seoul 07336 (KR)
(72) Inventor: BACK, Seoyoung, Seoul 06772 (KR); PARK, Giwon, Seoul 06772 (KR); LEE, Seungmin, Seoul 06772 (KR); HONG, Jongwoo, Seoul 06772 (KR)
(74) Representative: Frenkel, Matthias Alexander
(86) International application number: PCT/KR2022/000092
(87) International publication number: WO 2022/146129

(57) **Abstract**

The present disclosure relates to resource allocation in a wireless communication system. According to one embodiment of the present disclosure, a method performed by means of a first user equipment (UE) in a wireless communication system comprises the steps of: receiving, from a second UE, information about a packet delay budget (PDB) set by means of a network; generating data to be transmitted to the network; selecting a resource for the transmission of the data through a first link on the basis of the PDB, the first link being a link between the first UE and the second UE; and transmitting, to the second UE, the data through the first link on the basis of the selected resource, wherein the PDB is determined on the basis of a measurement for the first link and a measurement for a second link between the second UE and the network.

## Description

### TECHNICAL FIELD

The present disclosure relates to resource allocation in a wireless communication system.

### BACKGROUND ART

A wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency (SC-FDMA) system. There is a division multiple access (MC-FDMA) system and a multi carrier frequency division multiple access (MC-FDMA) system.

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

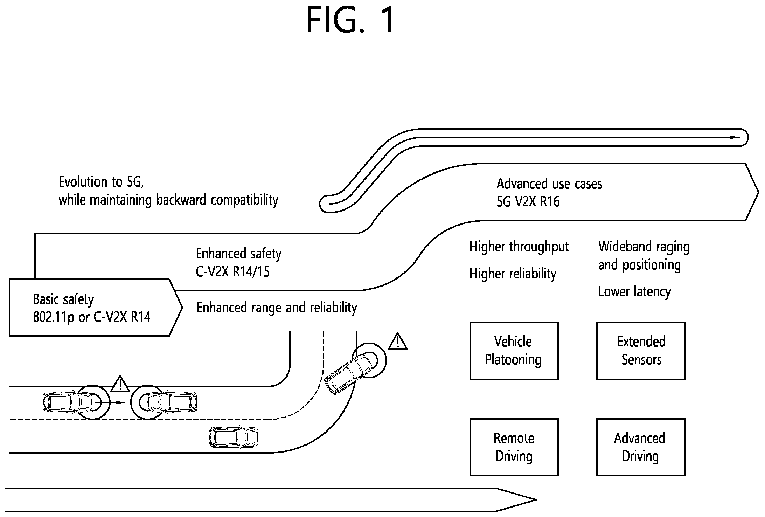

FIG. 1 is a drawing for describing V2X communication based on NR, compared to V2X communication based on RAT used before NR.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

For example, the CAM may include basic vehicle information such as vehicle dynamic state information such as direction and speed, vehicle static data such as dimensions, external lighting conditions, and route details. For example, the UE may broadcast CAM, and the latency of CAM may be less than 100 ms. For example, when an unexpected situation such as a vehicle breakdown or an accident occurs, a UE may generate a DENM and transmit it to another UE. For example, all vehicles within the transmission range of the UE can receive CAM and/or DENM. In this case, DENM may have a higher priority than CAM.

Thereafter, regarding V2X communication, various V2X scenarios are proposed in NR. For example, the various V2X scenarios may include vehicle platooning, advanced driving, extended sensors, remote driving, or the like.

For example, based on vehicle platooning, vehicles can dynamically form groups and move together. For example, to perform platoon operations based on vehicle platooning, vehicles belonging to the group may receive periodic data from the lead vehicle. For example, vehicles belonging to the group may shorten or widen the distance between vehicles using periodic data.

For example, based on enhanced driving, vehicles can be semi-automated or fully automated. For example, each vehicle may adjust trajectories or maneuvers based on data obtained from local sensors of proximate vehicles and/or proximate logical entities. Also, for example, each vehicle may mutually share driving intention with nearby vehicles.

For example, based on extended sensors, raw data or processed data obtained through local sensors, or live video data may be used for vehicles, logical entities, UEs of pedestrians, and / or may be interchanged between V2X application servers. Thus, for example, a vehicle can recognize an environment that is more advanced than an environment that can be sensed using its own sensors.

For example, based on remote driving, for a person who cannot drive or a remote vehicle located in a dangerous environment, a remote driver or V2X application may operate or control the remote vehicle. For example, when a route can be predicted, such as in public transportation, cloud computing-based driving may be used to operate or control the remote vehicle. Also, for example, access to a cloud-based back-end service platform can be considered for remote driving.

Meanwhile, ways to specify service requirements for various V2X scenarios, such as vehicle platooning, enhanced driving, extended sensors, and remote driving, are being discussed in NR-based V2X communication.

In order for a UE to perform transmission in a wireless communication system, resources must be allocated. For example, a UL grant is required for the UE to perform UL transmission, and an SL grant is required for performing SL transmission. In SL transmission, the UE may be allocated resources from the network, but may also autonomously select resources from a preconfigured resource pool.

### TECHNICAL PROBLEM

The present disclosure provides a method and apparatus for resource allocation in a wireless communication system.

The present disclosure provides a method and apparatus for allocating an SL grant in a wireless communication system.

The present disclosure provides a method and apparatus for allocating an SL grant to a remote UE and/or a relay UE during a relay operation in a wireless communication system.

### TECHNICAL SOLUTION

According to an embodiment of the present disclosure, a method performed by a first user equipment (UE) in a wireless communication system comprises: receiving, from a second UE, information for a packet delay budget (PDB) configured by a network; generating data to be transmitted to the network; selecting a resource for transmitting the data through a first link based on the PDB, the first link being a link between the first UE and the second UE; and transmitting the data to the second UE through the first link based on the selected resource, wherein the PDB is determined based on a measurement on the first link and a measurement on a second link between the second UE and the network.

According to an embodiment of the present disclosure, a method performed by a first user equipment (UE) in a wireless communication system comprises: receiving, from a network, information for a packet delay budget (PDB) configured by the network; receiving, from the network, data to be transmitted to a second UE; based on the PDB, selecting a resource for transmission of the data through a first link, the first link being a link between the first UE and the second UE; and transmitting the data to the second UE through the first link based on the selected resource; wherein the PDB is determined based on a measurement on the first link and a measurement on a second link between the first UE and the network.

According to an embodiment of the present disclosure, a method performed by a base station (BS) in a wireless communication system comprises: obtaining information for a measurement of a first link and information for a measurement of a second link, wherein the first link is a link between a first user equipment (UE) and a second UE, and the second link is a link between the first UE and the BS; determining a packet delay budget (PDB) for the first UE and a PDB for the second UE based on the measurement of the first link and the measurement of the second link; and transmitting information for the PDB for the first UE to the first UE and transmitting information for the PDB for the second UE to the second UE.

According to an embodiment of the present disclosure, a first user equipment (UE) in a wireless communication system comprises: a transceiver; a memory; and at least one processor operatively coupled to the transceiver and the memory, wherein the at least one processor is configured to: control the transceiver to receive, from a second UE, information for a packet delay budget (PDB) configured by a network; generate data to be transmitted to the network; select a resource for transmitting the data through a first link based on the PDB, the first link being a link between the first UE and the second UE; and control the transceiver to transmit the data to the second UE through the first link based on the selected resource, wherein the PDB is determined based on a measurement on the first link and a measurement on a second link between the second UE and the network.

According to an embodiment of the present disclosure, a first user equipment (UE) in a wireless communication system comprises: a transceiver; a memory; and at least one processor operatively coupled to the transceiver and the memory, wherein the at least one processor is configured to: control the transceiver to receive, from a network, information for a packet delay budget (PDB) configured by the network; control the transceiver to receive, from the network, data to be transmitted to a second UE; based on the PDB, select a resource for transmission of the data through a first link, the first link being a link between the first UE and the second UE; and control the transceiver to transmit the data to the second UE through the first link based on the selected resource; wherein the PDB is determined based on a measurement on the first link and a measurement on a second link between the first UE and the network.

According to an embodiment of the present disclosure, a base station (BS) in a wireless communication system comprises: a transceiver; a memory; and at least one processor operatively coupled to the transceiver and the memory, wherein the at least one processor is configured to: obtain information for a measurement of a first link and information for a measurement of a second link, wherein the first link is a link between a first user equipment (UE) and a second UE, and the second link is a link between the first UE and the BS; determine a packet delay budget (PDB) for the first UE and a PDB for the second UE based on the measurement of the first link and the measurement of the second link; and control the transceiver to transmit information for the PDB for the first UE to the first UE and transmitting information for the PDB for the second UE to the second UE.

According to an embodiment of the present disclosure, a memory of a processor for a first user equipment (UE) in a wireless communication system stores a software code implementing instructions that, when executed by the processor, perform operations comprising: receiving, from a second UE, information for a packet delay budget (PDB) configured by a network; generating data to be transmitted to the network; selecting a resource for transmitting the data through a first link based on the PDB, the first link being a link between the first UE and the second UE; and transmitting the data to the second UE through the first link based on the selected resource, wherein the PDB is determined based on a measurement on the first link and a measurement on a second link between the second UE and the network.

According to an embodiment of the present disclosure, a non-transitory computer readable medium has stored thereon a plurality of instructions that, when executed by a processor of a first user equipment (UE), perform operations comprising: receiving, from a second UE, information for a packet delay budget (PDB) configured by a network; generating data to be transmitted to the network; selecting a resource for transmitting the data through a first link based on the PDB, the first link being a link between the first UE and the second UE; and transmitting the data to the second UE through the first link based on the selected resource, wherein the PDB is determined based on a measurement on the first link and a measurement on a second link between the second UE and the network.

### ADVANTAGEOUS EFFECTS

The present disclosure may have various effects.

For example, when a resource for sidelink transmission between a remote UE and a relay UE is selected, a PDB value that considers not only the sidelink channel condition but also the Uu link channel condition is used, so that latency requirements can be better satisfied in relay operation.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, in accordance with an embodiment of the present disclosure.
FIG. 3 shows a radio protocol architecture, in accordance with an embodiment of the present disclosure.
FIG. 4 shows a structure of a radio frame of an NR, in accordance with an embodiment of the present disclosure.
FIG. 5 shows a structure of a slot of an NR frame, in accordance with an embodiment of the present disclosure.
FIG. 6 shows an example of a BWP, in accordance with an embodiment of the present disclosure.
FIG. 7 shows a procedure of performing V2X or SL communication by a UE based on a transmission mode, in accordance with an embodiment of the present disclosure.
FIG. 8 shows an example of a UE-to-network relay according to an embodiment of the present disclosure.
FIG. 9 shows an example of a UE-to-UE relay according to an embodiment of the present disclosure.
FIG. 10 shows an example of a resource request procedure for SL transmission according to an embodiment of the present disclosure.
FIG. 11 shows an example of a procedure for a remote UE to be allocated with an SL grant according to an embodiment of the present disclosure.
FIG. 12 shows an example of a method performed by a first UE according to an embodiment of the present disclosure.
FIG. 13 shows an example of a method performed by a second UE according to an embodiment of the present disclosure.
FIG. 14 shows an example of a method performed by a base station (BS) according to an embodiment of the present disclosure.
FIG. 15 shows an example of a procedure for allocating an SL grant to a relay UE based on mode 1 in a downlink relay operation according to an embodiment of the present disclosure.
FIG. 16 shows a communication system 1, in accordance with an embodiment of the present disclosure.
FIG. 17 shows wireless devices, in accordance with an embodiment of the present disclosure.
FIG. 18 shows a signal process circuit for a transmission signal, in accordance with an embodiment of the present disclosure.
FIG. 19 shows another example of a wireless device, in accordance with an embodiment of the present disclosure.
FIG. 20 shows a hand-held device, in accordance with an embodiment of the present disclosure.
FIG. 21 shows a vehicle or an autonomous vehicle, in accordance with an embodiment of the present disclosure.

### BEST MODE

### MODE FOR INVENTION

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDDCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

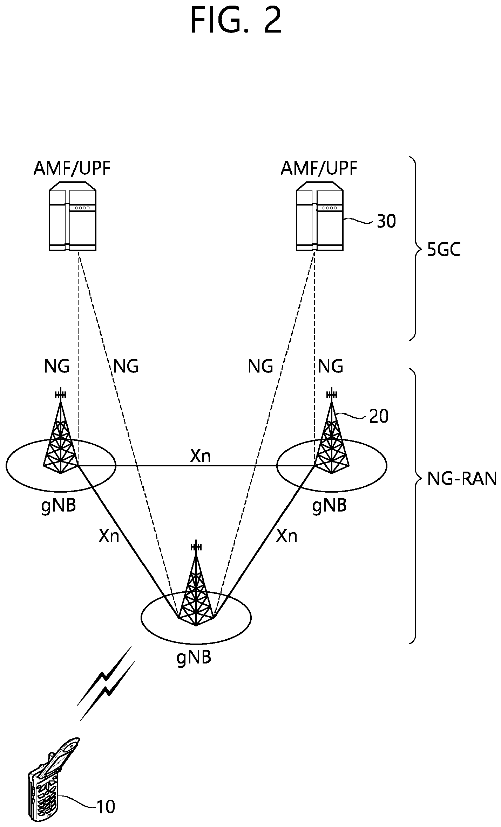

FIG. 2 shows a structure of an NR system, in accordance with an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

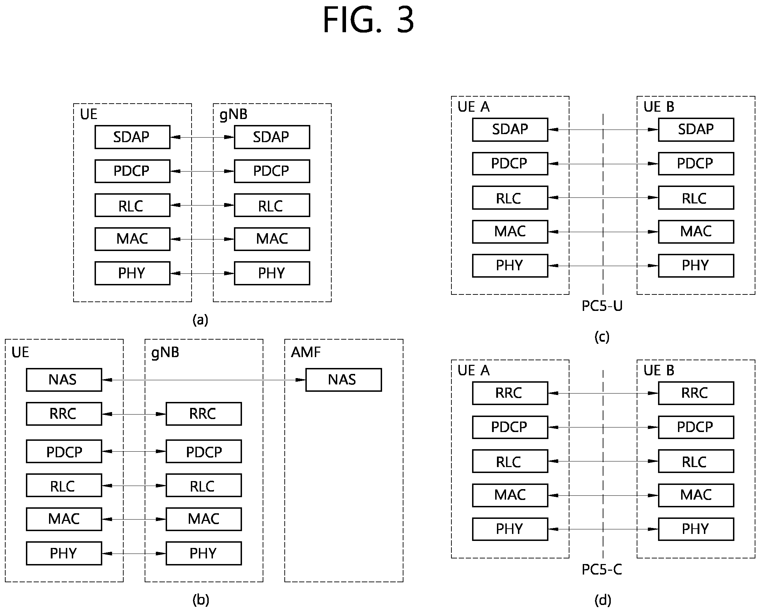

FIG. 3 shows a radio protocol architecture, in accordance with an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication, (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

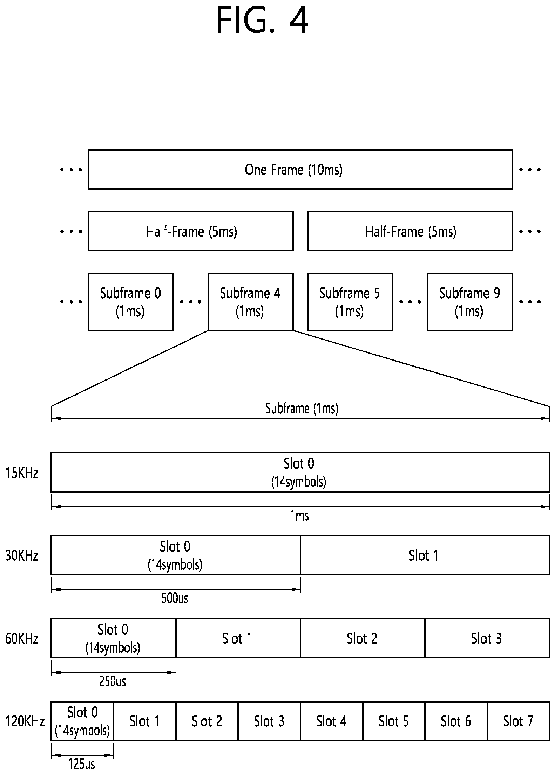

FIG. 4 shows a structure of a radio frame of an NR, in accordance with an embodiment of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined in accordance with subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) in accordance with an SCS configuration (u), in a case where a normal CP is used.

**Table 1**

| SCS (15^{∗}2^{u}) | N^{slot}_{symb} | | N^{frame,u}ₛₗₒₜ | | N^{subframe,u}ₛₗₒₜ | |
|---|---|---|---|---|---|---|
| 15KHz (u=0) | | 14 | | 10 | | 1 |
| 30KHz (u=1) | | 14 | | 20 | | 2 |
| 60KHz (u=2) | | 14 | | 40 | | 4 |
| 120KHz (u=3) | | 14 | | 80 | | 8 |
| 240KHz (u=4) | | 14 | | 160 | | 16 |

Table 2 shows an example of a number of symbols per slot, a number of slots per frame, and a number of slots per subframe in accordance with the SCS, in a case where an extended CP is used.

**[Table 2]**

| SCS (15^{∗}2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells. In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

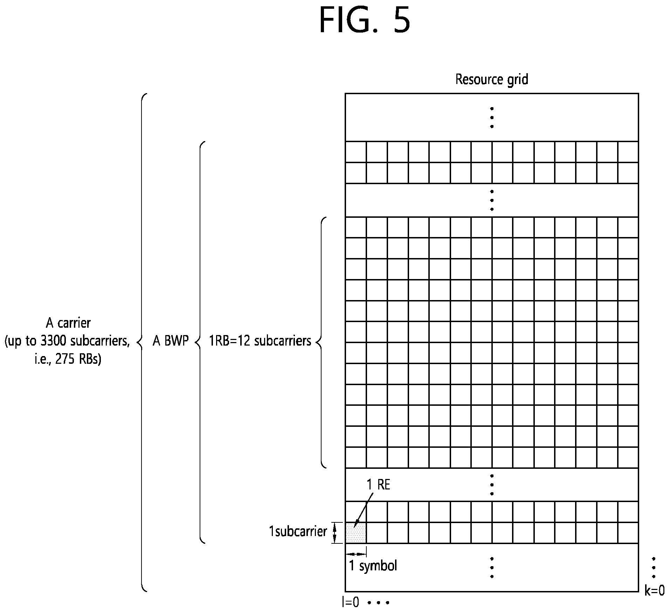

FIG. 5 shows a structure of a slot of an NR frame, in accordance with an embodiment of the present disclosure. Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Meanwhile, a radio interface between a UE and a UE or a radio interface between a UE and a network may be comprise a first layer, an L2 layer, and an L3 layer. In various embodiments of the present disclosure, layer 1 may mean a physical layer. Also, for example, the L2 layer may mean at least one of a MAC layer, an RLC layer, a PDCP layer, or an SDAP layer. Also, for example, the L3 layer may mean an RRC layer.

Hereinafter, V2X or SL communication will be described.

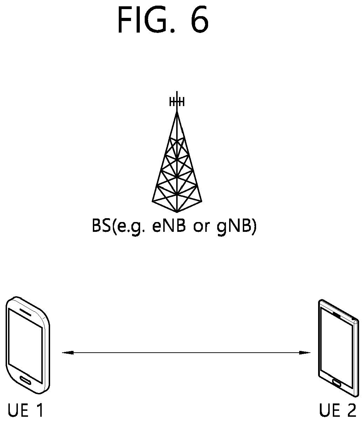

FIG. 6 shows a UE performing V2X or SL communication, in accordance with an embodiment of the present disclosure. The embodiment of FIG. 6 may be combined with various embodiments of the present disclosure.

Referring to FIG. 6, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Resource pools can be subdivided into several types. For example, according to the content of the SL signal transmitted in each resource pool, the resource pool may be classified as follows.

(1) Scheduling Assignment (SA) may be a signal comprising information such as a location of the resource used by the transmitting UE for transmission of the SL data channel, MCS (Modulation and Coding Scheme) required for demodulation of data channels or MIMO (Multiple Input Multiple Output) transmission scheme, TA (Timing Advance). SA can also be multiplexed and transmitted together with SL data on the same resource unit. In this case, the SA resource pool may mean a resource pool in which SA is multiplexed with SL data and transmitted. SA may also be referred to as an SL control channel.

(2) SL data channel (Physical Sidelink Shared Channel, PSSCH) may be a resource pool used by a transmitting UE to transmit user data. If SA is multiplexed and transmitted together with SL data on the same resource unit, only the SL data channel in a form excluding SA information can be transmitted in the resource pool for the SL data channel. In other words, Resource Elements (REs) used to transmit SA information on separate resource units in the SA resource pool may still be used to transmit SL data in the resource pool of the SL data channel. For example, the transmitting UE may transmit the PSSCH by mapping it to consecutive PRBs.

(3) A discovery channel may be a resource pool for a transmitting UE to transmit information such as its own ID. Through this, the transmitting UE can allow neighbour UEs to discover themselves.

Even when the contents of the SL signals described above are the same, different resource pools may be used according to transmission/reception properties of the SL signals. For example, even for the same SL data channel or discovery message, depending on a method for determining the transmission timing of the SL signal (e.g., whether it is transmitted at the reception time of the synchronization reference signal or transmitted by applying a certain timing advance at the reception time), resource allocation method (e.g., whether the base station assigns separate signal transmission resources to separate transmission UEs or whether separate transmission UEs select separate signal transmission resources within the resource pool), signal format (e.g., the number of symbols occupied by each SL signal in one subframe, or the number of subframes used for transmission of one SL signal), signal strength from a base station, transmit power strength of an SL UE, etc., resource pools may be divided into different resource pools.

UE 2 may perform indirect communication with the base station through UE 1. Such indirect communication may be performed through an access link (or Uu link) between UE 1 and the base station and a sidelink between UE 1 and UE 2. UE 1 may relay signal transmission between the base station and UE 2. In this case, UE 1 may be referred to as a relay UE, and UE 2 may be referred to as a remote UE. A connection that UE 2 establishes with UE 1 and/or a base station to perform indirect communication may be referred to as an indirect connection.

For example, the remote UE may be within the connection range (in-coverage) of the base station. In this case, the remote UE may be within the connection range of the same base station as the relay UE or may be within the connection range of different base station.

As another example, the remote UE may be outside the connection range of the base station (out-of-coverage).

On the other hand, UE 2 may perform direct communication with the base station without relaying of UE 1. Such direct communication may be performed through an access link (or Uu link) between UE 2 and the base station. A connection that UE 2 establishes with a base station to perform direct communication may be referred to as a direct connection.

For synchronization between UE 1 and UE 2, one UE may transmit a Sidelink Synchronization Signal (SLSS) to another UE. The SLSS may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

Meanwhile, in the NR SL system, a plurality of numerologies having different SCS and/or CP lengths may be supported. In this case, as the SCS increases, the length of time resources through which the transmitting UE transmits the S-SSB may be shortened. Accordingly, coverage of the S-SSB may decrease. Therefore, in order to guarantee coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, an S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two or four S-SSBs to the receiving UE within one S-SSB transmission period.

For example, when the SCS is 60 kHz in FR2, the transmitting UE can transmit 1, 2, 4, 8, 16 or 32 S-SSBs to the receiving UE within one S-SSB transmission period. there is. For example, if the SCS is 120 kHz in FR2, the transmitting UE may transmit 1, 2, 4, 8, 16, 32 or 64 S-SSBs to the receiving UE within one S-SSB transmission period.

Meanwhile, when the SCS is 60 kHz, two types of CPs may be supported. In addition, the structure of the S-SSB transmitted from the transmitting UE to the receiving UE may be different according to the CP type. For example, the CP type may be Normal CP (NCP) or Extended CP (ECP). Specifically, for example, when the CP type is NCP, the number of symbols mapped to the PSBCH in the S-SSB transmitted by the transmitting UE may be 9 or 8. On the other hand, for example, when the CP type is ECP, the number of symbols mapped to the PSBCH in the S-SSB transmitted by the transmitting UE may be 7 or 6. For example, a PSBCH may be mapped to a first symbol in an S-SSB transmitted by a transmitting UE. For example, a receiving UE receiving the S-SSB may perform an automatic gain control (AGC) operation in the first symbol interval of the S-SSB.

Hereinafter, resource allocation in SL will be described.

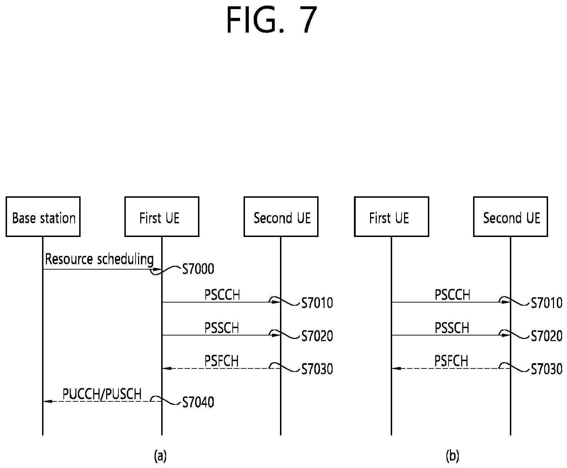

FIG. 7 shows a procedure of performing V2X or SL communication by a UE based on a transmission mode, in accordance with an embodiment of the present disclosure. The embodiment of FIG. 7 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 7 shows a UE operation related to an LTE transmission mode 1 or an LTE transmission mode 3. Alternatively, for example, (a) of FIG. 7 shows a UE operation related to an NR resource allocation mode 1. For example, the LTE transmission mode 1 may be applied to general SL communication, and the LTE transmission mode 3 may be applied to V2X communication.

For example, (b) of FIG. 7 shows a UE operation related to an LTE transmission mode 2 or an LTE transmission mode 4. Alternatively, for example, (b) of FIG. 7 shows a UE operation related to an NR resource allocation mode 2.

Referring to (a) of FIG. 7, in the LTE transmission mode 1, the LTE transmission mode 3, or the NR resource allocation mode 1, a BS may schedule an SL resource to be used by the UE for SL transmission. For example, in step S7000, the base station may transmit information related to SL resources and/or information related to UL resources to the first UE. For example, the UL resource may include a PUCCH resource and/or a PUSCH resource. For example, the UL resource may be a resource for reporting SL HARQ feedback to the base station.

For example, the first UE may receive information related to dynamic grant (DG) resources and/or information related to configured grant (CG) resources from the base station. For example, CG resources may include CG type 1 resources or CG type 2 resources. In this specification, the DG resource may be a resource configured/allocated by the base station to the first UE through downlink control information (DCI). In this specification, the CG resource may be a (periodic) resource configured/allocated by the base station to the first UE through a DCI and/or RRC message. For example, in the case of a CG type 1 resource, the base station may transmit an RRC message including information related to the CG resource to the first UE. For example, in the case of a CG type 2 resource, the base station may transmit an RRC message including information related to the CG resource to the first UE, and the base station may transmit a DCI related to activation or release of the CG resource to the first UE.

In step S7010, the first UE may transmit a PSCCH (e.g., Sidelink Control Information (SCI) or 1st-stage SCI) to the second UE based on the resource scheduling. In step S7020, the first UE may transmit a PSSCH (e.g., 2nd-stage SCI, MAC PDU, data, etc.) related to the PSCCH to the second UE. In step S7030, the first UE may receive the PSFCH related to the PSCCH/PSSCH from the second UE. For example, HARQ feedback information (e.g., NACK information or ACK information) may be received from the second UE through the PSFCH. In step S7040, the first UE may transmit / report HARQ feedback information to the base station through PUCCH or PUSCH. For example, the HARQ feedback information reported to the base station may be information that the first UE generates based on the HARQ feedback information received from the second UE. For example, the HARQ feedback information reported to the base station may be information generated by the first UE based on a rule configured in advance. For example, the DCI may be a DCI for SL scheduling. For example, the format of the DCI may be DCI format 3_0 or DCI format 3_1.

Referring to (b) of FIG. 7, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. For example, in step S7010, the first UE that has selected a resource within the resource pool can transmit a PSCCH (e.g., Sidelink Control Information (SCI) or 1st-stage SCI) to the second UE using the resource. In step S7020, the first UE may transmit a PSSCH (e.g., 2nd-stage SCI, MAC PDU, data, etc.) related to the PSCCH to the second UE. In step S7030, the first UE may receive the PSFCH related to the PSCCH/PSSCH from the second UE.

Referring to (a) or (b) of FIG. 7 , for example, UE 1 may transmit SCI to UE 2 on PSCCH. Alternatively, for example, UE 1 may transmit two consecutive SCI (e.g., 2-stage SCI) to UE 2 on PSCCH and/or PSSCH. In this case, UE 2 may decode two consecutive SCIs (e.g., 2-stage SCI) in order to receive the PSSCH from UE 1. In this specification, SCI transmitted on PSCCH may be referred to as a 1st SCI, first SCI, 1st-stage SCI or 1st-stage SCI format, and SCI transmitted on PSSCH may be referred to as 2nd SCI, second SCI, 2nd-stage SCI or a 2nd-stage SCI format. For example, the 1st-stage SCI format may include SCI format 1-A, and the 2nd-stage SCI format may include SCI format 2-A and/or SCI format 2-B.

Referring to (a) or (b) of FIG. 7 , in step S7030, the first UE may receive the PSFCH. For example, UE 1 and UE 2 may determine a PSFCH resource, and UE 2 may transmit HARQ feedback to UE 1 using the PSFCH resource.

Referring to (a) of FIG. 7, in step S7040, the first UE may transmit SL HARQ feedback to the base station through PUCCH and/or PUSCH.

Hereinafter, a sidelink control information (SCI) will be described.

Control information transmitted by a BS to a UE through a PDCCH may be referred to as downlink control information (DCI), whereas control information transmitted by the UE to another UE through a PSCCH may be referred to as SCI. For example, the UE may know in advance a start symbol of the PSCCH and/or the number of symbols of the PSCCH, before decoding the PSCCH. For example, the SCI may include SL scheduling information. For example, the UE may transmit at least one SCI to another UE to schedule the PSSCH. For example, one or more SCI formats may be defined.

For example, a transmitting UE may transmit the SCI to a receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the transmitting UE may transmit the first SCI to the receiving UE through the PSCCH. For example, the transmitting UE may transmit the second SCI to the receiving UE on the PSCCH and/or the PSSCH. For example, the second SCI may be transmitted to the receiving UE through an (independent) PSCCH, or may be transmitted in a piggyback manner together with data through the PSSCH. For example, two consecutive SCIs may also be applied to different transmissions (e.g., unicast, broadcast, or groupcast).

For example, the transmitting UE may transmit the entirety or part of information described below to the receiving UE through the SCI. Herein, for example, the transmitting UE may transmit the entirety or part of the information described below to the receiving UE through the first SCI and/or the second SCI.
- PSSCH and/or PSCCH related resource allocation information, e.g., the number/positions of time/frequency resources, resource reservation information (e.g., period), and/or
- SL CSI report request indicator or SL (1) RSRP (and/or SL (1) RSRQ and/or SL (L1) RSSI) report request indicator, and/or
- SL CSI transmission indicator (or SL (1) RSRP (and/or SL (1) RSRQ and/or SL (L1) RSSI) information transmission indicator)) (on PSSCH), and/or
- MCS information, and/or
- Transmit power information, and/or
- 1 destination ID information and/or 1 source ID information, and/or
- SL HARQ process ID information, and/or
- New data indicator (NDI) information, and/or
- Redundancy version (RV) information, and/or
- (Transmission traffic/packet related) QoS information, e.g., priority information, and/or
- SL CSI-RS transmission indicator or information on the number of (to-be-transmitted) SL CSI-RS antenna ports,
- Location information of a transmitting UE or location (or distance region) information of a target receiving UE (for which SL HARQ feedback is requested), and/or
- Reference signal (e.g., DMRS, etc.) related to channel estimation and/or decoding of data to be transmitted through a PSSCH, e.g., information related to a pattern of a (time-frequency) mapping resource of DMRS, rank information, antenna port index information

For example, the first SCI may include information related to channel sensing. For example, the receiving UE may decode the second SCI by using a PSSCH DMRS. A polar code used in a PDCCH may be applied to the second SCI. For example, in a resource pool, a payload size of the first SCI may be identical for unicast, groupcast, and broadcast. After decoding the first SCI, the receiving UE does not have to perform blind decoding of the second SCI. For example, the first SCI may include scheduling information of the second SCI.

Meanwhile, in various embodiments of the present disclosure, since the transmitting UE may transmit at least one of the SCI, the first SCI, and/or the second SCI to the receiving UE through the PSCCH, the PSCCH may be replaced / substituted with at least one of the SCI, the first SCI, and/or the second SCI. And/or, for example, the SCI may be replaced/substituted with at least one of the PSCCH, the first SCI, and/or the second SCI. And/or, for example, since the transmitting UE may transmit the second SCI to the receiving UE through the PSSCH, the PSSCH may be replaced/substituted with the second SCI.

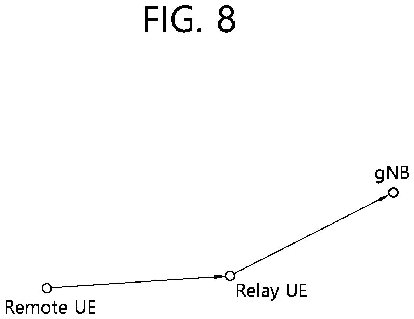

FIG. 8 shows an example of a UE-to-network relay according to an embodiment of the present disclosure.

Referring to FIG. 8, a remote UE may perform indirect communication with a base station (e.g., gNB) through a relay UE. Such indirect communication may be performed through an access link (or Uu link) between the relay UE and the base station and a side link between the relay UE and the remote UE. The relay UE may relay signal transmission between the base station and the remote UE. When the remote UE performs indirect communication with the base station through the relay UE, a connection between the remote UE and the base station may be referred to as an indirect connection.

For example, the remote UE may be within the connection range of the base station (in-coverage). In this case, the remote UE may be within the connection range of the same base station as the relay UE or may be within the connection range of different base stations.

In addition, when the remote UE is within the connection range of the base station, the remote UE may perform direct communication with the base station without going through a relay UE. Such direct communication may be performed through an access link (or Uu link) between the remote UE and the base station. When the remote UE performs direct communication with the base station, a connection between the remote UE and the base station may be referred to as a direct connection.

As another example, the remote UE may be outside the connection range of the base station (out-of-coverage).

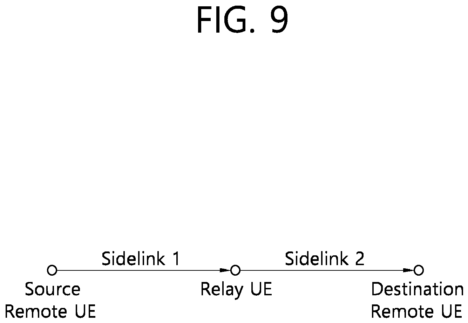

FIG. 9 shows an example of a UE-to-UE relay according to an embodiment of the present disclosure.

Referring to FIG. 9, a source remote UE may perform indirect communication with a destination remote UE through a relay UE. Such indirect communication may be performed through a first sidelink between the relay UE and the source remote UE and a second sidelink between the relay UE and the destination remote UE. The relay UE may relay signal transfer between the source remote UE and the destination remote UE. When the source remote UE performs indirect communication with the destination remote UE through the relay UE, the connection between the source remote UE and the destination remote UE may be referred to as an indirect connection.

For example, the source remote UE/relay UE/destination remote UE may be within the in-coverage of the base station. In this case, the source remote UE/relay UE/destination remote UE may be within the connection range of the same base station or may be within the connection range of different base stations.

In addition, when the source remote UE/relay UE/destination remote UE is within the connection range of the base station, the source remote UE/relay UE/destination remote UE may perform direct communication with the base station. Such direct communication may be performed through an access link (or Uu link) between the source remote UE/relay UE/destination remote UE and the base station. When the source remote UE/relay UE/destination remote UE communicates directly with the base station, the connection between the source remote UE/relay UE/destination remote UE and the base station may be referred to as direct connection.

As another example, the source remote UE/relay UE/destination remote UE may be outside the connection range of the base station (out-of-coverage).

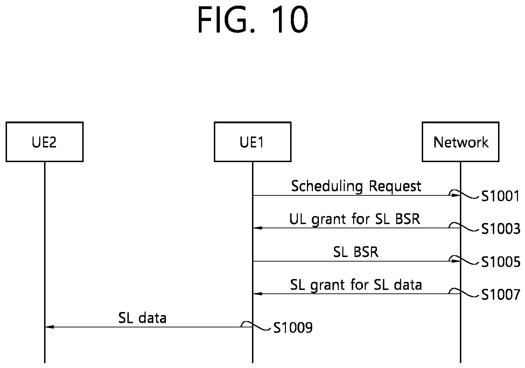

FIG. 10 shows an example of a resource request procedure for SL transmission according to an embodiment of the present disclosure. FIG. 10 shows a method in which a transmission (TX) UE is allocated with a grant according to mode 1.

Referring to FIG. 10, in step S1001, UE1 may transmit a scheduling request (SR) to a network (e.g., a base station). UE1 may transmit an SR through PUCCH for requesting a UL grant used to transmit the SL-BSR to the network.

In step S1003, UE1 may receive the UL grant used to transmit the SL-BSR from the network. The network may transmit DCI to UE1 to allocate PUSCH resources (i.e., UL grant) to UE1.

In step S1005, UE1 may transmit the SL-BSR to the network based on the UL grant. UE1 may transmit the SL-BSR indicating the amount of SL data remaining in the buffer of UE1 to the network using the UL grant and/or a PUSCH resource. SL-BSR may be transmitted through MAC CE.

In step S1007, UE1 may receive an SL grant used to transmit SL data from the network. The network may allocate PSSCH resources (i.e., SL grant) to UE1.

In step S1009, UE1 may transmit SL data to UE2 based on the SL grant. UE1 may transmit SL data to UE2 using an SL grant and/or a PSSCH resource.

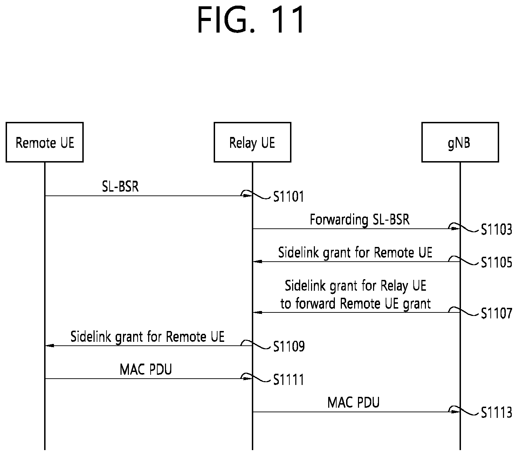

FIG. 11 shows an example of a procedure for a remote UE to be allocated with an SL grant according to an embodiment of the present disclosure. FIG. 11 shows a method in which a remote UE is allocated with a grant according to mode 1. In FIG. 11, the remote UE may be a TX UE.

Referring to FIG. 11, in step S1101, the remote UE may transmit an SL-BSR indicating the amount of SL data remaining in the buffer of the remote UE to the relay UE using PSCCH resources.

In step S1103, the relay UE may forward the SL-BSR received from the remote UE to a network (e.g., base station/gNB).

In step S1105, the network may transmit an SL grant for the remote UE to the relay UE. In addition, in step S1107, the network may transmit an SL grant so that the relay UE can deliver/forward the SL grant for the remote UE to the remote UE (i.e., the SL grant for the relay UE) to the relay UE. The order in which steps S1105 and S1107 are performed may be mutually changed or may be performed simultaneously.

In step S1109, the relay UE may deliver/forward the SL grant for the remote UE to the remote UE by using the SL grant for the relay UE.

In step S1111, the remote UE may transmit SL data (e.g., MAC PDU) to the relay UE by using the SL grant for the remote UE. In step S1113, the relay UE may forward the SL data received from the remote UE to the network.

As shown in FIG. 11, when the remote UE operates according to mode 1, additional relay/forwarding/transfer operations are required to receive an SL grant, so more latency, operation overhead, and/or signaling overhead may occur.

According to FIGs. 10 and 11, for mode 1-based grant allocation in the NR sidelink, a TX UE intending to transmit data through the sidelink transmits resource request signaling (e.g., SR/BSR) in uplink in the RRC_CONNECTED state to the base station, and the base station may allocate the SL grant to the TX UE based on the resource request signaling.

Meanwhile, in the UE-to-network relay, data transmitted by the gNB is transmitted to the remote UE via the relay UE, and data transmitted by the remote UE to the gNB may be transmitted through the relay UE. The relay UE may exist within the coverage of the gNB, and the remote UE may exist within or outside the coverage of the gNB. When the remote UE exists outside the coverage of the gNB, the same effect as extending the coverage of the gNB through the relay UE may occur. In addition, even when the remote UE is within the coverage of the gNB, the remote UE may communicate with the gNB using the relay UE for an operation such as power saving. Communication between the gNB and the relay UE may be performed through a Uu link, and communication between the remote UE and the relay UE may be performed through a sidelink.

A grant must be allocated for the remote UE to transmit packets to the gNB. Also, the grant must be allocated for the relay UE to forward the packet received from the gNB to the remote UE or to forward the packet received from the remote UE to the gNB.

The present disclosure proposes a method for a relay UE performing a relay operation to receive according to mode 1 and/or select according to mode 2 an SL grant necessary for transmitting data to a remote UE.

In addition, the present disclosure also proposes a condition for the remote UE to operate according to mode 1.

Mode 1 referred to in the present disclosure includes NR resource allocation mode 1 described in FIG. 7, and mode 2 includes NR resource allocation mode 2 described in FIG. 7. In addition, various embodiments of the present disclosure may be applied to a UE-to-network relay related to L2/L3.

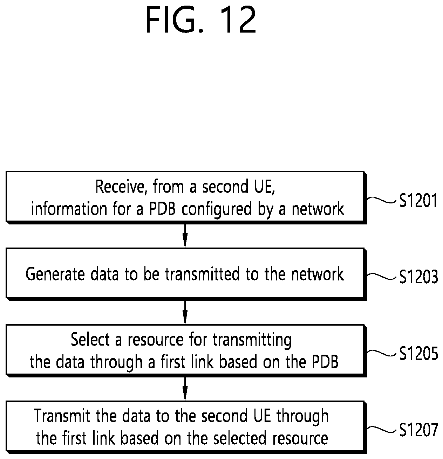

FIG. 12 shows an example of a method performed by a first UE according to an embodiment of the present disclosure.

Referring to FIG. 12, in step S1201, the first UE may receive, from a second UE, information for a packet delay budget (PDB) configured by a network. The PDB may be determined based on a measurement on a first link and a measurement on a second link. The first link may be a link between the first UE and the second UE (e.g., sidelink). The second link may be a link between the second UE and the network (e.g., Uu link).

In step S1203, the first UE may generate data to be transmitted to the network.

In step S1205, the first UE may select a resource for transmitting the data through a first link based on the PDB.

In step S1207, the first UE may transmit the data to the second UE through the first link based on the selected resource.

According to various embodiments, the PDB may comprise an upper bound of an allowed latency for the first link.

According to various embodiments, the measurement of the first link may comprise a channel busy ratio (CBR) for the first link. The measurement of the second link may comprise a CBR for the second link.

According to various embodiments, the information for the PDB may comprise at least one of a quality of service (QoS) identifier indicating a combination of QoS characteristics including the PDB or a logical channel identifier (LCID) associated with the QoS identifier.

According to various embodiments, the first UE may autonomously select a resource satisfying the QoS characteristics within the PDB from a resource pool.

According to various embodiments, a non-transitory computer readable medium may have stored thereon a plurality of instructions that, when executed by a processor of a first user equipment (UE), perform operations comprising: receiving, from a second UE, information for a packet delay budget (PDB) configured by a network; generating data to be transmitted to the network; selecting a resource for transmitting the data through a first link based on the PDB, the first link being a link between the first UE and the second UE; and transmitting the data to the second UE through the first link based on the selected resource, wherein the PDB is determined based on a measurement on the first link and a measurement on a second link between the second UE and the network.

According to various embodiments, a memory of a processor for a first user equipment (UE) in a wireless communication system may store a software code implementing instructions that, when executed by the processor, perform operations comprising: receiving, from a second UE, information for a packet delay budget (PDB) configured by a network; generating data to be transmitted to the network; selecting a resource for transmitting the data through a first link based on the PDB, the first link being a link between the first UE and the second UE; and transmitting the data to the second UE through the first link based on the selected resource, wherein the PDB is determined based on a measurement on the first link and a measurement on a second link between the second UE and the network.

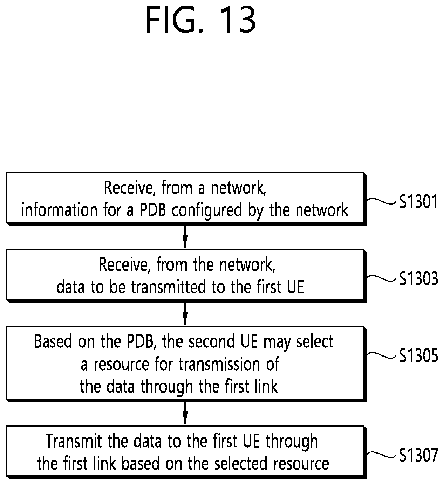

FIG. 13 shows an example of a method performed by a second UE according to an embodiment of the present disclosure.

Referring to FIG. 13, in step S1301, the second UE may receive, from a network, information for a packet delay budget (PDB) configured by the network. The PDB may be determined based on a measurement on a first link and a measurement on a second link. The first link may be a link between the first UE and the second UE (e.g., sidelink). The second link may be a link between the second UE and the network (e.g., Uu link).

In step S1303, the second UE may receive, from the network, data to be transmitted to the first UE.

In step S1305, based on the PDB, the second UE may select a resource for transmission of the data through the first link.

In step S1307, the second UE may transmit the data to the first UE through the first link based on the selected resource.

According to various embodiments, the PDB may comprise an upper bound of an allowed latency for the first link.

According to various embodiments, the measurement on the first link may comprise a channel busy ratio (CBR) for the first link. The measurement on the second link may comprise a CBR for the second link.

According to various embodiments, the information for the PDB may comprise at last one of a QoS identifier indicating a combination of quality of service (QoS) characteristics including the PDB, a logical channel identifier (LCID) associated with the QoS identifier, or an LCID of a logical channel associated with the second link to which data received from the first UE is mapped.

According to various embodiments, the second UE may autonomously select a resource satisfying the QoS characteristics within the PDB from a resource pool.

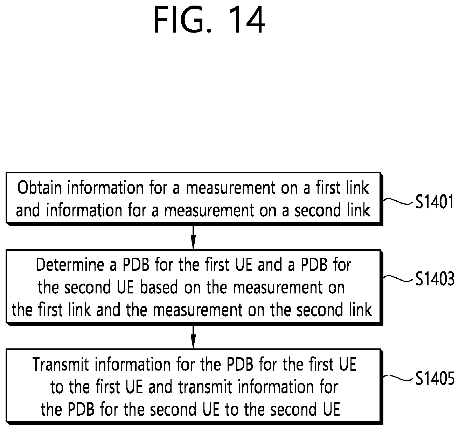

FIG. 14 shows an example of a method performed by a base station (BS) according to an embodiment of the present disclosure.

Referring to FIG. 14, in step S1401, the BS may obtain information for a measurement on a first link and information for a measurement on a second link. The first link may be a link between a first user equipment (UE) and a second UE (e.g., sidelink). The second link may be a link between the first UE and the BS (e.g., Uu link).

In step S1403, the BS may determine a packet delay budget (PDB) for the first UE and a PDB for the second UE based on the measurement on the first link and the measurement on the second link.

In step S1405, the BS may transmit information for the PDB for the first UE to the first UE and transmit information for the PDB for the second UE to the second UE.

According to various embodiments, the PDB for the first UE and the PDB for the second UE may comprise an upper bound of an allowed latency for the first link.

According to various embodiments, the PDB for the first UE and the PDB for the second UE may be used to select a resource for transmission of data through the first link between the first UE and the second UE.

According to various embodiments, the information for the PDB for the first UE may comprise at least one of a quality of service (QoS) identifier indicating a combination of QoS characteristics including the PDB for the first UE, a logical channel identifier (LCID) associated with the QoS identifier or an LCID of a logical channel associated with the second link to which data received from the second UE is mapped. The information for the PDB for the second UE may comprise at least one of a QoS identifier indicating a combination of QoS characteristics including the PDB for the second UE or an LCID associated with the QoS identifier.

According to various embodiments, the first UE and the second UE may be autonomous vehicles that perform vehicle-to-everything (V2X) communication with each other.

In FIGs. 12 to 14, for example, the first UE and the second UE may be a remote UE and a relay UE, respectively, in the UE-to-network relay shown in FIG. 8, but are not limited thereto.

Detailed method for determining an SL grant for the relay UE to forward data received from the network to the remote UE or for the remote UE to transmit data to the network through the relay UE is as follows.

### I. When the base station transmits a message to the remote UE (i.e., in the case of downlink operation through a relay UE)

### 1. Mode 1 operation

### (1) Method 1

When the base station transmits a message to the remote UE as a target (i.e., in the case of a downlink relay operation), the base station may first transmit a corresponding message to the relay UE. At this time, since the base station knows that the final destination of the message currently being transmitted is the remote UE and knows the size of the message to be transmitted, when the BS transmits the message, the BS can also transmit to the relay UE the SL grant for the relay UE to transmit the message to the remote UE. That is, even if the base station does not receive resource request signaling (e.g., SR/BSR) for transmitting a message to the remote UE from the relay UE, when the base station transmits a message to be delivered to the remote UE through the relay UE, the base station may allocate an SL grant suitable for the size of the corresponding message together with transmitting the message. In this case, the base station may allocate the SL grant in consideration of the processing time of the relay UE. In addition, when the relay UE receives a message to be delivered from the base station to the remote UE, it may not transmit the SR/BSR for the corresponding message.

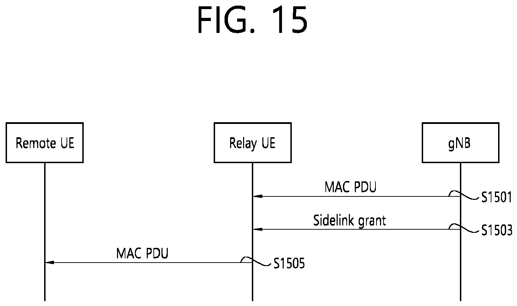

FIG. 15 shows an example of a procedure for allocating an SL grant to a relay UE based on mode 1 in a downlink relay operation according to an embodiment of the present disclosure.

Referring to FIG. 15, in step S1501, the gNB may transmit a MAC PDU to the relay UE.

In step S1503, the gNB may allocate an SL grant for transferring the MAC PDU to the remote UE to the relay UE. That is, the gNB may allocate the SL grant to the relay UE even though it has not received resource request signaling (e.g., SR/BSR) from the relay UE.

In step S1505, the relay UE may transfer the MAC PDU to the remote UE using the SL grant allocated by the gNB.

The relay UE needs to distinguish between a grant for a relay operation (i.e.,, an SL grant for forwarding data received from the gNB to the remote UE) and a grant for a sidelink operation not related to the relay operation (i.e., an SL grant for transmitting data generated by a relay UE to a remote UE according to a sidelink operation). To this end, the base station may distinguish and inform whether the allocated grant is a grant for a sidelink operation not related to a relay operation or a grant for a relay operation through control signaling such as DCI/RRC/MAC_CE. The relay UE can facilitate scheduling for message transmission based on the corresponding control signaling.

### (2) Method 2

The base station transmits a message to the relay UE, and only when the relay UE responds (or transmits) an ACK for the message to the base station, the relay UE may be allocated with an SL grant for forwarding the message to the remote UE. Since the base station knows the size of the message transmitted by the base station, the base station may transmit/allocate an SL grant corresponding to the corresponding DL message size to the relay UE even if resource request signaling (eg, SR / BSR) is not received from the relay UE, only when an ACK for the message is received from the relay UE. Since the SL grant for delivering the message to the remote UE may be required only when the message is received/decoded by the relay UE, the base station allocates the SL grant to the relay UE only when it receives an ACK for the corresponding message from the relay UE. Meanwhile, even when the relay UE receives the DL message and transmits the ACK, the base station may not allocate an SL grant for the relay UE to forward the corresponding DL message to the remote UE to the relay UE. In particular, if the base station determines that the transmission message cannot reach the remote UE within the PDB of the transmission message even if the base station allocates the sidelink resource/grant, the base station may not allocate the sidelink resource/grant. Accordingly, since only valid resources are allocated, the efficiency of resource utilization can be increased. The corresponding operation may also be applied to the case of operating only with DG (Dynamic Grant).

### (3) Method 3

Meanwhile, since the RTT timer gap is consumed until the relay UE transmits an ACK to the base station, the base station allocates sidelink DG resources to the relay UE when transmitting DL data, and even if the relay UE does not receive resource request signaling (e.g., SR / BSR) from the remote UE, DL data may be delivered to the remote UE using sidelink DG resources from the time when the relay UE detects the ACK for the DL data (or the time when the relay UE transmits the ACK to the base station). In general, when DG resources are allocated, they are expected to be used for message transmission from the beginning of the allocated DG resources, but in this case, since the relay UE receives an SL grant once and transmits SL data using the allocated grant from the time of transmitting the ACK to the base station or from the time of detecting the ACK, it may be different from the general DG operation. In addition, considering this, the base station may allocate an SL grant of a larger size than the size of a message transmitted through Uu downlink when allocating the SL grant. When method 3 is applied, the same SL grant as in method 1 is allocated, so method 3 may be less resource efficient than method 2, but since the actual message is transmitted only when the ACK is transmitted (or when the ACK is detected) through the Uu link, there is an advantage in that interference with neighboring sidelink can be reduced.

In methods 1 to 3 described above, the message may include at least one of a PDSCH or a PDCCH.

### 2. Mode 2 operation

When the remote UE and the relay UE perform SL communication based on mode 2, SL transmission resource selection is performed based on sensing. When transmitting a message through a relay UE in downlink, the relay UE must know a PDB value for resource selection for the corresponding message. When direct SL communication is performed based on mode 2 in which a relay is not used, a PDB value may be estimated based on a PC5 QoS identifier (PQI) value configured in a higher layer. However, in the case of a relay operation, since a packet is not generated in an upper layer of the relay UE, it may be impossible to use a PQI value provided by an upper layer of the relay UE. Since the PDB value that can be allowed between the base station and the remote UE is generated by the base station (indicated by 5G QoS identifier (5QI)), if the relay UE does not know the remaining PDB value, it may be ambiguous for the relay UE to select a resource in a certain PDB range and perform transmission in relay operation. To solve this problem, the base station may include remaining PDB information when transmitting the MAC PDU to the relay UE. The remaining PDB value may be included in the header value of the MAC PDU and transmitted, but in this case, HARQ combining may not be possible. This is because the remaining PDB value may be information that changes every retransmission. Accordingly, the remaining PDB value may be information included in the 1^{st} SCI and/or the 2^{nd} SCI.

### II. When the remote UE transmits a message to the base station (ie, in case of uplink relay operation)

### 1. Mode 1 operation

### (1) Method 1

The remote UE may be configured with a predetermined latency threshold and/or a delay-related threshold. The corresponding configuration may be predefined or configured through control signaling such as RRC/MAC CE. The latency threshold can represent the minimum or maximum time from when a request for the mode 1 grant (e.g., SR/BSR) by the remote UE arrives at the base station via the relay UE until the grant allocated for the remote UE by the base station reaches the remote UE. Alternatively, the latency threshold may indicate the minimum or maximum time of the entire process from when a request for the mode 1 grant (e.g., SR/BSR) by the remote UE arrives at the base station via the relay UE until the grant allocated for the remote UE by the base station reaches the remote UE. Since the remote UE knows the remaining PDB value of the MAC PDU to be transmitted (when multiple logical channel values are multiplexed, the smallest latency value or the highest priority PDB), when the remaining PDB value is less than the predetermined latency threshold, operation may be performed based on mode 2. That is, even if the remote UE requests a grant, if it is determined that the time at which the corresponding grant reaches the remote UE will not satisfy the PDB of the service already included in the MAC PDU, the remote UE may operate based on mode 2.

### (2) Method 2

When the remote UE requests a mode 1 grant to the base station, the remote UE can transmit the remote UE's remaining PDB (when multiple logical channel values are multiplexed, the smallest latency value or the highest priority PDB) information together with the SR/BSR. The base station may allocate an SL grant suitable for the remaining PDB value provided by the remote UE based on the corresponding information. Alternatively, the remote UE may operate with the expectation that the base station will allocate an SL grant suitable for the remaining PDB value provided by the remote UE.

### 2. Mode 2 operation

The PDB of the MAC PDU generated by the remote UE may be the sum of the latency used for the sidelink between the remote UE and the relay UE and the latency used for the Uu link between the relay UE and the gNB. Accordingly, the latency allowed for the remote UE to transmit the MAC PDU to the relay UE may be information configured by the base station. The base station determines the sidelink channel condition (e.g., congestion level and/or CBR) reported by the relay UE (or remote UE) and the channel condition (e.g., congestion level and/or CBR) of the Uu link. Based on this, a maximum (or minimum) available latency range that the remote UE can use during SL communication (or that can be used when selecting resources) can be configured for the remote UE. Also, the base station may configure a related latency to the relay UE. For example, the base station may allocate an LCID for a sidelink to a remote UE, configure a parameter (e.g., PQI/5QI) related to the LCID, and configure information indicating to the relay UE that to which LCID for a Uu link a packet received from the remote UE should be mapped.

Alternatively, since the remote UE is ultimately connected to the gNB, a service between the gNB and the remote UE may be configured based on 5QI. In this case, the gNB may configure the remote UE with a mapping relationship between the corresponding 5QI and a PQI for transmitting data from the remote UE to the relay UE.

Alternatively, when there is no configuration for PDB and/or latency, the time range in which the remote UE can select a resource may be limited to not more than half (1/2) of the PDB of the MAC PDU to be transmitted. If there is no suitable resource that can satisfy QoS within 1/2*PDB within the resource range sensed by the remote UE, the remote UE triggers relay UE reselection, or may select worse resource (that is, a resource that cannot satisfy QoS) even if QoS is likely to be compromised.

Alternatively, in the case of relay operation, since the message has to reach the gNB via two hops of sidelink and Uu link, the remote UE first selects a resource that is ahead in time as much as possible within allowable resources but may include the remaining PDB in the MAC header and/or SCI and transmit the MAC header and/or the SCI to the relay UE. Upon receiving the remaining PDB, the relay UE, when requesting uplink resources to the gNB, may transmit the MAC PDU mapped to an LCID to which a grant can be allocated within the remaining PDB.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

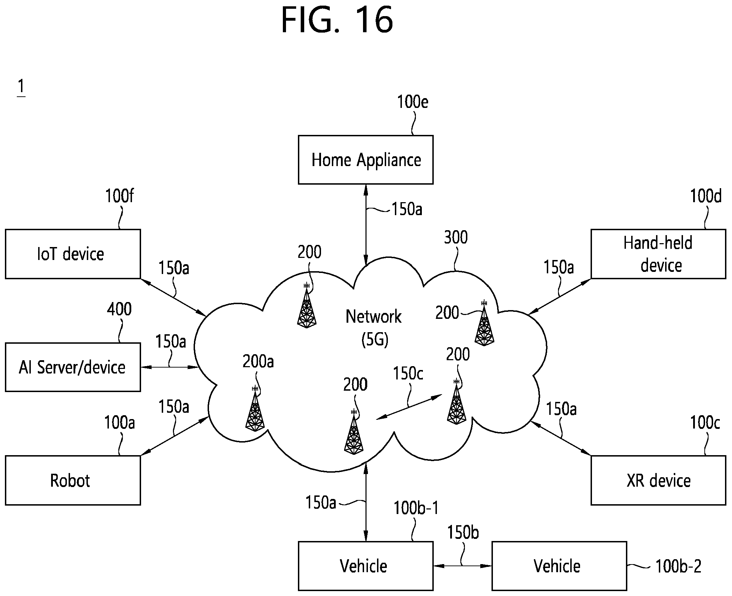

FIG. 16 shows a communication system 1, in accordance with an embodiment of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

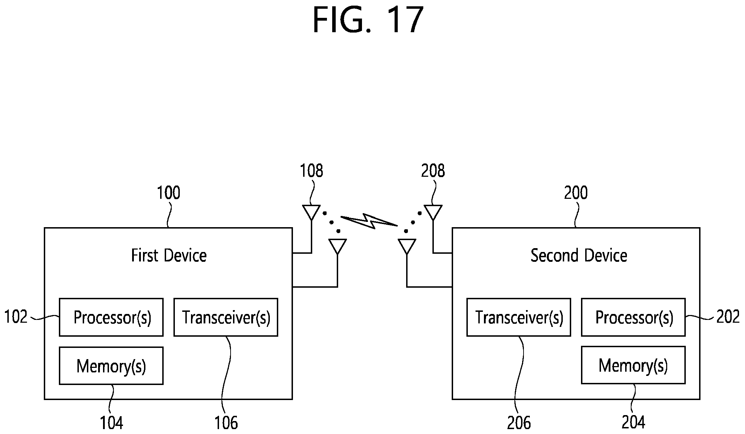

FIG. 17 shows wireless devices, in accordance with an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments, the first wireless device 100 and/or one or more processors 102 may be configured to implement operations performed by the first UE in the present disclosure. For example, one or more processors 102 may be configured to control one or more transceivers 106 to receive, from a second UE, information for a packet delay budget (PDB) configured by a network. The PDB may be determined based on a measurement on a first link and a measurement on a second link. The first link may be a link between the first UE and the second UE (e.g., sidelink). The second link may be a link between the second UE and the network (e.g., Uu link). The one or more processors 102 may be configured to generate data to be transmitted to the network. The one or more processors 102 may be configured to select a resource for transmitting the data through a first link based on the PDB. The one or more processors 102 may be configured to control one or more transceivers 106 to transmit the data to the second UE through the first link based on the selected resource.

According to various embodiments, the first wireless device 100 and/or one or more processors 102 may be configured to implement operations performed by the second UE in the present disclosure. For example, one or more processors 102 may be configured to control one or more transceivers 106 to receive, from a network, information for a packet delay budget (PDB) configured by the network. The PDB may be determined based on a measurement on a first link and a measurement on a second link. The first link may be a link between the first UE and the second UE (e.g., sidelink). The second link may be a link between the second UE and the network (e.g., Uu link). The one or more processors 102 may be configured to control one or more transceivers 106 to receive, from the network, data to be transmitted to the first UE. The one or more processors 102 may be configured to, based on the PDB, the second UE may select a resource for transmission of the data through the first link. The one or more processors 102 may be configured to control one or more transceivers 106 to transmit the data to the first UE through the first link based on the selected resource.

According to various embodiments, the second wireless device 200 and/or one or more processors 202 may be configured to implement operations performed by a base station (e.g., a mobility source/target base station) in the present disclosure. For example, one or more processors 202 may be configured to control one or more transceivers 206 to obtain information for a measurement on a first link and information for a measurement on a second link. The first link may be a link between a first user equipment (UE) and a second UE (e.g., sidelink). The second link may be a link between the first UE and the BS (e.g., Uu link). The one or more processors 202 may be configured to determine a packet delay budget (PDB) for the first UE and a PDB for the second UE based on the measurement on the first link and the measurement on the second link. The one or more processors 202 may be configured to control the transceiver 206 to transmit information for the PDB for the first UE to the first UE and transmit information for the PDB for the second UE to the second UE.

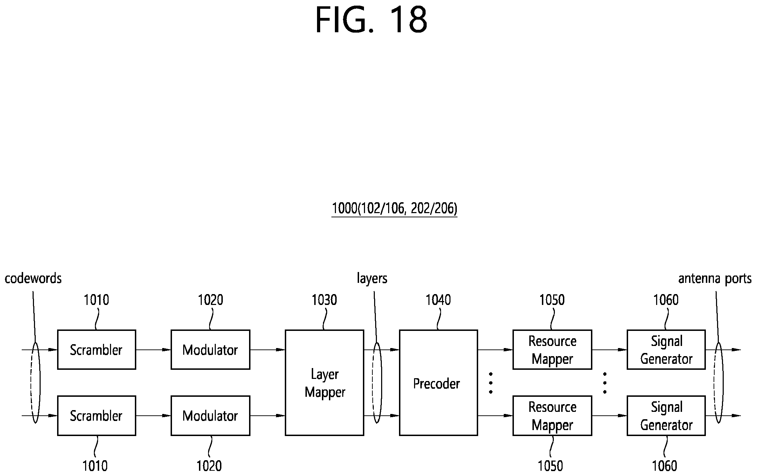

FIG. 18 shows a signal process circuit for a transmission signal, in accordance with an embodiment of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

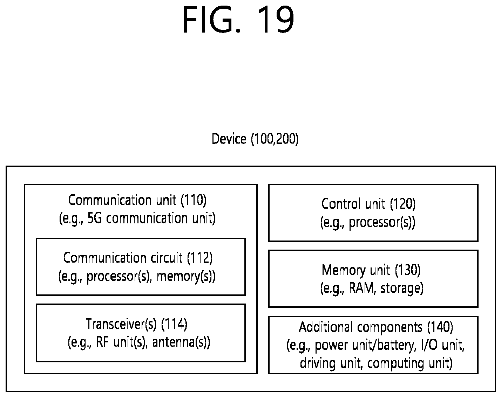

FIG. 19 shows another example of a wireless device, in accordance with an embodiment of the present disclosure. The wireless device may be implemented in various forms according to a use-case/service (refer to FIG. 16).

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast UE, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

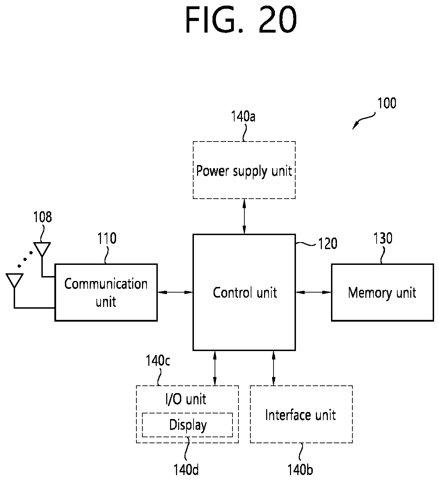

FIG. 20 shows a hand-held device, in accordance with an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user UE (UT), a Mobile Subscriber Station (MSS), a Subscriber Station (SS), an Advanced Mobile Station (AMS), or a Wireless UE (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

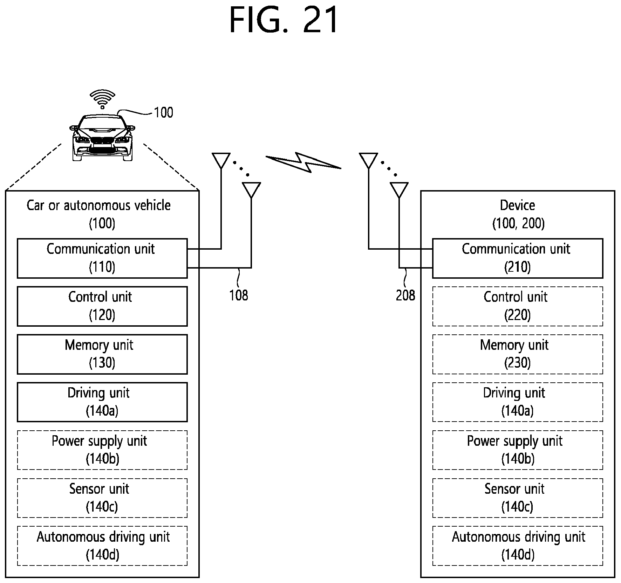

FIG. 21 shows a vehicle or an autonomous vehicle, in accordance with an embodiment of the present disclosure. The vehicle or autonomous vehicle may be implemented by a mobile robot, a car, a train, a manned/unmanned Aerial Vehicle (AV), a ship, etc.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

The present disclosure may have various effects.

For example, when a resource for sidelink transmission between a remote UE and a relay UE is selected, a PDB value that considers not only the sidelink channel condition but also the Uu link channel condition is used, so that latency requirements can be better satisfied in relay operation.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first user equipment (UE) in a wireless communication system, the method comprising:
receiving, from a second UE, information for a packet delay budget (PDB) configured by a network;
generating data to be transmitted to the network;
selecting a resource for transmitting the data through a first link based on the PDB, the first link being a link between the first UE and the second UE; and
transmitting the data to the second UE through the first link based on the selected resource,
wherein the PDB is determined based on a measurement on the first link and a measurement on a second link between the second UE and the network.

2. The method of claim 1, wherein the PDB comprises an upper bound of an allowed latency for the first link.

3. The method of claim 1, wherein the measurement of the first link comprises a channel busy ratio (CBR) for the first link, and
wherein the measurement of the second link comprises a CBR for the second link.

4. The method of claim 1, wherein the information for the PDB comprises at least one of a quality of service (QoS) identifier indicating a combination of QoS characteristics including the PDB or a logical channel identifier (LCID) associated with the QoS identifier.

5. The method of claim 4, wherein the selecting of the resource comprises autonomously selecting a resource satisfying the QoS characteristics within the PDB from a resource pool.

6. A method performed by a first user equipment (UE) in a wireless communication system, the method comprising:
receiving, from a network, information for a packet delay budget (PDB) configured by the network;
receiving, from the network, data to be transmitted to a second UE;
based on the PDB, selecting a resource for transmission of the data through a first link, the first link being a link between the first UE and the second UE; and
transmitting the data to the second UE through the first link based on the selected resource;
wherein the PDB is determined based on a measurement on the first link and a measurement on a second link between the first UE and the network.

7. The method of claim 6, wherein the PDB comprises an upper bound of an allowed latency for the first link.

8. The method of claim 6, wherein the measurement on the first link comprises a channel busy ratio (CBR) for the first link, and
wherein the measurement of the second link comprises a CBR for the second link.

9. The method of claim 6, wherein the information for the PDB comprises at last one of a QoS identifier indicating a combination of quality of service (QoS) characteristics including the PDB, a logical channel identifier (LCID) associated with the QoS identifier, or an LCID of a logical channel associated with the second link to which data received from the second UE is mapped.

10. The method of claim 9, wherein the selecting of the resource comprises autonomously selecting a resource satisfying the QoS characteristics within the PDB from a resource pool.

11. A method performed by a base station (BS) in a wireless communication system, the method comprising:
obtaining information for a measurement of a first link and information for a measurement of a second link, wherein the first link is a link between a first user equipment (UE) and a second UE, and the second link is a link between the first UE and the BS;
determining a packet delay budget (PDB) for the first UE and a PDB for the second UE based on the measurement of the first link and the measurement of the second link; and
transmitting information for the PDB for the first UE to the first UE and transmitting information for the PDB for the second UE to the second UE.

12. The method of claim 11, wherein the PDB for the first UE and the PDB for the second UE comprise an upper bound of an allowed latency for the first link.

13. The method of claim 11, wherein the PDB for the first UE and the PDB for the second UE are used to select a resource for transmission of data through the first link between the first UE and the second UE.

14. The method according to claim 11, wherein the information for the PDB for the first UE comprises at least one of a quality of service (QoS) identifier indicating a combination of QoS characteristics including the PDB for the first UE, a logical channel identifier (LCID) associated with the QoS identifier or an LCID of a logical channel associated with the second link to which data received from the second UE is mapped, and
wherein the information for the PDB for the second UE comprises at least one of a QoS identifier indicating a combination of QoS characteristics including the PDB for the second UE or an LCID associated with the QoS identifier.

15. The method of claim 11, wherein the first UE and the second UE are autonomous vehicles that perform vehicle-to-everything (V2X) communication with each other.

16. A first user equipment (UE) in a wireless communication system, the first UE comprising:
a transceiver;
a memory; and
at least one processor operatively coupled to the transceiver and the memory,
wherein the at least one processor is configured to:
control the transceiver to receive, from a second UE, information for a packet delay budget (PDB) configured by a network;
generate data to be transmitted to the network;
select a resource for transmitting the data through a first link based on the PDB, the first link being a link between the first UE and the second UE; and
control the transceiver to transmit the data to the second UE through the first link based on the selected resource,
wherein the PDB is determined based on a measurement on the first link and a measurement on a second link between the second UE and the network.

17. A first user equipment (UE) in a wireless communication system, the first UE comprising:
a transceiver;
a memory; and
at least one processor operatively coupled to the transceiver and the memory,
wherein the at least one processor is configured to:
control the transceiver to receive, from a network, information for a packet delay budget (PDB) configured by the network;
control the transceiver to receive, from the network, data to be transmitted to a second UE;
based on the PDB, select a resource for transmission of the data through a first link, the first link being a link between the first UE and the second UE; and
control the transceiver to transmit the data to the second UE through the first link based on the selected resource;
wherein the PDB is determined based on a measurement on the first link and a measurement on a second link between the first UE and the network.

18. A base station (BS) in a wireless communication system, the BS comprising:
a transceiver;
a memory; and
at least one processor operatively coupled to the transceiver and the memory,
wherein the at least one processor is configured to:
obtain information for a measurement of a first link and information for a measurement of a second link, wherein the first link is a link between a first user equipment (UE) and a second UE, and the second link is a link between the first UE and the BS;
determine a packet delay budget (PDB) for the first UE and a PDB for the second UE based on the measurement of the first link and the measurement of the second link; and
control the transceiver to transmit information for the PDB for the first UE to the first UE and transmitting information for the PDB for the second UE to the second UE.

19. A processor for a first user equipment (UE) in a wireless communication system, wherein a memory of the processor stores a software code implementing instructions that, when executed by the processor, perform operations comprising:
receiving, from a second UE, information for a packet delay budget (PDB) configured by a network;
generating data to be transmitted to the network;
selecting a resource for transmitting the data through a first link based on the PDB, the first link being a link between the first UE and the second UE; and
transmitting the data to the second UE through the first link based on the selected resource,
wherein the PDB is determined based on a measurement on the first link and a measurement on a second link between the second UE and the network.

20. A non-transitory computer readable medium having stored thereon a plurality of instructions that, when executed by a processor of a first user equipment (UE), perform operations comprising:
receiving, from a second UE, information for a packet delay budget (PDB) configured by a network;
generating data to be transmitted to the network;
selecting a resource for transmitting the data through a first link based on the PDB, the first link being a link between the first UE and the second UE; and
transmitting the data to the second UE through the first link based on the selected resource,
wherein the PDB is determined based on a measurement on the first link and a measurement on a second link between the second UE and the network.
